# DEMANDE DE BREVET EUROPEEN

(11) **EP 1 834 556 A1**
(43) Date de publication de la demande: **19.09.2007**
(21) Numéro de dépôt: 07290314.9
(22) Date de dépôt: 13.03.2007
(51) Int. Cl.: A47J 37/06

(54) **Cuve d'un barbecue électrique**

(30) Priorité: 16.03.2006 FR 0602332
(71) Demandeur: SEB S.A., 69130 Ecully (FR)
(72) Inventeur: Viret, Franck, 74150 Rumilly (FR)
(74) Mandataire: Pichat, Thierry

(57) **Abrégé**

L'invention concerne une cuve (1) d'un barbecue électrique comprenant au moins un bec verseur (6).

## Description

La présente invention concerne une cuve d'un barbecue électrique.

De façon classique, un barbecue électrique comprend une surface de cuisson adaptée à supporter un aliment à cuire, un dispositif électrique de chauffe disposé dans la surface de cuisson et adapté à cuire l'aliment, et une cuve adaptée à supporter la surface de cuisson et le dispositif électrique de chauffe et à contenir de l'eau. L'eau est utilisée, selon les barbecues, pour protéger thermiquement les parois de la cuve quand celle-ci est réalisée en une matière supportant mal les températures élevées, et/ou pour refroidir les jus de cuisson provenant de l'aliment et éviter qu'ils ne brûlent au contact d'une surface de réception (en général en métal) à température élevée portée soit par la cuve elle-même, soit par un réflecteur thermique flottant dans la cuve.

Cette cuve remplie d'eau est peu maniable et, vu son volume, sa vidange n'est pas aisée.

La présente invention vise à réaliser une cuve dont la vidange est aisée.

Selon l'invention, la cuve comprend au moins un bec verseur.

La présence de ce bec verseur permet de vidanger très facilement la cuve.

D'autres particularités et avantages apparaîtront dans la description du mode de réalisation donné à titre d'exemple non limitatif et illustré au dessin représentant en perspective une cuve conforme à la présente invention.

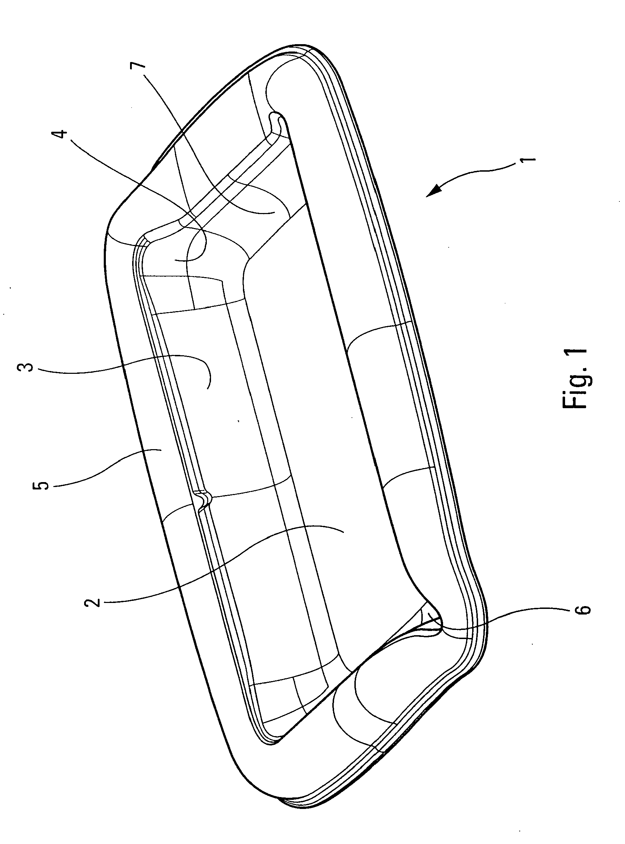

Comme on peut le voir à la figure 1, une cuve 1 à eau d'un barbecue définit un volume qui est délimité par une paroi de fond 2 et des parois latérales 3 (ici, quatre parois latérales 3). Les parois latérales 3 se rejoignent deux à deux selon des arêtes 4 sensiblement verticales plus ou moins prononcées. Par ailleurs, pour faciliter la manipulation de la cuve 1, l'extrémité libre des parois latérales est prolongée par un rebord périphérique 5 qui s'étend vers l'extérieur de la cuve, de façon sensiblement horizontale. Les rebords périphériques 5 quasi-horizontaux, comme on peut le voir à la figure 1, présentent une forme bombée. Selon l'invention, afin de faciliter la vidange de la cuve 1, celle-ci comprend un bec verseur 6 qui, dans le présent mode de réalisation est réalisé au sommet d'une arête 4 de la cuve 1. La présence du bec verseur 6 est d'autant plus appréciable que l'extension quasi-horizontale des rebords périphériques 5 rendent le positionnement d'un versage de vidange passablement aléatoire.

Par ailleurs, la présence du bec verseur permet également de faciliter le nettoyage de la cuve, surtout quand les arêtes 4 verticales, ainsi que celles 7 reliant la paroi de fond 2 aux différentes parois latérales 4 sont arrondies.

L'invention n'est pas limitée au mode de réalisation donné à titre d'exemple. Ainsi, la cuve pourrait contenir plusieurs becs verseurs, par exemple, un à chaque arête. Le(s) bec(s) verseur(s) pourrai(en)t également être disposé(s) ailleurs qu'au niveau d'une arête, par exemple au centre d'une paroi latérale.

De plus, l'invention n'est pas limitée aux cuves à eau utilisés dans les barbecues, mais concerne également les réflecteurs thermiques qui reçoivent les jus de cuisson.

## Revendications

1. Cuve (1) d'un barbecue électrique, **caractérisée en ce qu'**elle comprend au moins un bec verseur (6).

2. Cuve (1) selon la revendication 1, **caractérisée en ce qu'**un bec verseur (6) est réalisé au sommet d'une arête (4) reliant deux parois latérales (3) de la cuve (1).

3. Cuve (1) selon la revendication 2, **caractérisée en ce qu'**un bec verseur (6) est réalisé à chaque arête (4) reliant deux parois latérales (3) de la cuve (1).

4. Cuve (1) selon l'une des revendications 1 à 3, **caractérisée en ce que** chaque arête (4) reliant deux parois latérales (3) de la cuve (1) est arrondie.

5. Cuve (1) selon l'une des revendications 1 à 4, **caractérisée en ce que** chaque arête (7) reliant une paroi latérale (3) à la paroi de fond (2) de la cuve (1) est arrondie.

6. Cuve (1) selon l'une des revendications 1 à 5 formant cuve à eau.

7. Cuve (1) selon l'une des revendications 1 à 5 formant réflecteur thermique.
